# EUROPEAN PATENT APPLICATION

(11) **EP 4 592 065 A1**
(43) Date of publication of application: **30.07.2025**
(21) Application number: 23866961.8
(22) Date of filing: 30.05.2023
(51) Int. Cl.: B29C 65/72, B29C 65/58, B29C 65/08, B23K 20/10, B23K 20/26, H05K 5/04

(54) **ULTRASONIC WELDING AND SNAP-FITTING STRUCTURE AND ULTRASONIC WELDED HOUSING**

(30) Priority: 20.09.2022 CN 202222490250 U
(71) Applicant: Sungrow (Shanghai) Co., Ltd, Shanghai 201203 (CN)
(72) Inventor: LI, Feng, Shanghai 201203 (CN); WEI, Shiyuan, Shanghai 201203 (CN); LI, Meina, Shanghai 201203 (CN)
(74) Representative: Zacco Norway AS
(86) International application number: PCT/CN2023/097037
(87) International publication number: WO 2024/060664

(57) **Abstract**

Disclosed in the present invention are an ultrasonic welding and snap-fitting structure and an ultrasonic welded housing. The ultrasonic welding and snap-fitting structure comprises: first shell snap-fits, provided on a first shell; and second shell snap-fits, provided on a second shell and adapted to be snap-fitted to the first shell snap-fits. At least one of the first shell snap-fit and the second shell snap-fit comprises at least two snap-fits which are spaced in the assembling direction of the first shell and the second shell. Before ultrasonic welding, one corresponding first shell snap-fit is tightly snap-fitted to a second shell snap-fit, so that the first shell is tightly snap-fitted to the second shell during ultrasonic welding, thereby reducing the probability of separation of the first shell and the second shell during ultrasonic welding, and improving the efficiency and quality of ultrasonic welding. After ultrasonic welding, the other corresponding first shell snap-fit is tightly snap-fitted to the second shell snap-fit, thereby improving the connection strength after ultrasonic welding, i.e., improving the connection strength of the first shell and the second shell.

## Description

The present application claims the priority of the Chinese Patent Application No. 202222490250.0, titled "ULTRASONIC WELDING BUCKLE STRUCTURE AND ULTRASONIC WELDED HOUSING", filed on September 20, 2022 with the China National Intellectual Property Administration, which is incorporated herein by reference in its entirety.

### FIELD

The present application relates to the technical field of ultrasonic welding, and in particular to an ultrasonic welding buckle structure and an ultrasonic welded housing.

### BACKGROUND

In conventional technology, a first housing and a second housing are generally joined together for sealing by ultrasonic welding, in which the first housing may be a plastic housing, and the second housing may be a plastic housing cover.

Since the strength of the connection structure formed by ultrasonic welding is low, ultrasonic welding is generally used in conjunction with a buckle for improving the strength between the first housing and the second housing.

Specifically, two methods are generally used in ultrasonic welding in conjunction with the buckle. A first method is to first secure the first housing and the second housing with the buckle, followed by ultrasonic welding. A second method is to use the buckle to secure the first housing and the second housing after ultrasonic welding.

In the first method, the buckle is secured before ultrasonic welding. However, due to the melting of the welding part during ultrasonic welding, the first housing and the second housing may move relative to each other after ultrasonic welding, causing the secured buckle to become ineffective. This results in insufficient connection strength after ultrasonic welding, making the first housing and the second housing apt to separate from each other and causing sealing issues.

In the second method, the buckle is secured after ultrasonic welding, which means the buckle does not work during the welding process. As a result, the first housing and the second housing are more prone to separating from each other during the welding process, causing poor ultrasonic welding quality and low welding efficiency.

Therefore, how to use the ultrasonic welding in conjunction with the buckle to improve the connection strength, ultrasonic welding quality and welding efficiency after ultrasonic welding is a technical problem that needs to be solved urgently by those skilled in the art.

### SUMMARY

In view of this, an object of the present application is to provide an ultrasonic welding buckle structure to improve connection strength, ultrasonic welding quality and welding efficiency after ultrasonic welding. Another object of the present application is to provide an ultrasonic welded housing with the ultrasonic welding buckle structure described above.

In order to achieve the above object, the following technical solutions are provided according to the present application.

An ultrasonic welding buckle structure for realizing a buckle connection between a first housing and a second housing during ultrasonic welding includes:
a first housing buckle arranged on the first housing;
a second housing buckle arranged on the second housing and engaged with the first housing buckle;
at least two first housing buckles and at least one second housing buckle are sequentially arranged in an assembly direction of the first housing and the second housing, or at least one first housing buckle and at least two second housing buckles are sequentially arranged in the assembly direction of the first housing and the second housing.

Optionally, in the ultrasonic welding buckle structure described above, each first housing buckle is a male buckle, and each second housing buckle is a female buckle;
there are two buckles on the first housing, namely a first-layer male buckle and a second-layer male buckle, and the first-layer male buckle and the second-layer male buckle are arranged sequentially in the assembly direction of the first housing to the second housing;
when the first housing and the second housing are being ultrasonically welded, the first-layer male buckle is buckled with the second housing, and after the first housing and the second housing are ultrasonically welded, the second-layer male buckle is buckled with the second housing.

Optionally, in the ultrasonic welding buckle structure described above, the first-layer male buckle and the second-layer male buckle are of a stepped structure, and a width of the second-layer male buckle protruding from the first housing is smaller than that of the first-layer male buckle protruding from the first housing.

Optionally, in the ultrasonic welding buckle structure described above, a side of the first-layer male buckle facing away from the second-layer male buckle is connected with the first housing through a diagonal-braced rib plate.

Optionally, in the ultrasonic welding buckle structure described above, each first housing buckle is a male buckle, and each second housing buckle is a female buckle;
there are two buckles in the second housing, namely a first-layer female buckle and a second-layer female buckle respectively, and the first-layer female buckle and the second-layer female buckle are sequentially arranged in the assembly direction of the second housing to the first housing;
when the first housing and the second housing are being ultrasonically welded, the first-layer female buckle is buckled with the first housing, and after the first housing and the second housing are ultrasonically welded, the second-layer female buckle is buckled with the first housing.

Optionally, in the ultrasonic welding buckle structure described above, each first housing buckle is a male buckle, and each second housing buckle is a female buckle;
there are two first housing buckles, namely a first-layer male buckle and a second-layer male buckle respectively, and the first-layer male buckle and the second-layer male buckle are sequentially arranged in the assembly direction of the first housing to the second housing;
there are two second housing buckles, namely a first-layer female buckle and a second-layer female buckle respectively, and the first-layer female buckle and the second-layer female buckle are sequentially arranged in the assembly direction of the second housing to the first housing;
when the first housing and the second housing are being ultrasonically welded, the first-layer female buckle is engaged with the first-layer male buckle, and after the first housing and the second housing are ultrasonically welded, the second-layer female buckle is engaged with the second-layer male buckle.

Based on the ultrasonic welding buckle structure provided above, an ultrasonic welded housing is further provided according to the present application, which includes a first housing and a second housing. The first housing and the second housing are buckled and cooperate with each other by the ultrasonic welding buckle structure described above, and the first housing and the second housing are welded with each other by ultrasonic welding.

Optionally, in the ultrasonic welded housing described above, the second housing is provided with a slot, and the first housing is provided with an inserting plate inserted into the slot. The first housing buckle is arranged on the inserting plate, and the second housing buckle is arranged on a side wall of the slot.

Optionally, in the ultrasonic welded housing described above, a side of the inserting plate facing a bottom wall of the slot is a first welding surface, the bottom wall of the slot is a second welding surface, and at least one of the first welding surface and the second welding surface is provided with a welding rib.

Optionally, in the ultrasonic welded housing described above, the first housing is a plastic housing cover, and the second housing is a plastic housing. Alternatively, the first housing is a plastic housing, and the second housing is a plastic housing cover.

The ultrasonic welding buckle structure provided by the present application includes the first housing buckle and the second housing buckle, which are buckled and cooperate with each other, so that the first housing and the second housing are buckled with each other. At least two first housing buckles and at least one second housing buckle are sequentially arranged in an assembly direction of the first housing and the second housing, or at least one first housing buckle and at least two second housing buckles are sequentially arranged in the assembly direction of the first housing and the second housing, enabling the first housing buckle and the second housing buckle to be buckled and connected with each other before and after ultrasonic welding. The first housing and the second housing are securely buckled with each other during ultrasonic welding through the corresponding first housing buckle and the second housing buckle being secured with each other before ultrasonic welding, which reduces the probability of the first housing and the second housing breaking apart from each other during ultrasonic welding, improves the ultrasonic welding efficiency and quality, and provides the possibility for automatic production. After ultrasonic welding, another corresponding first housing buckle and second housing buckle are buckled tightly with each other, which improves the connection strength after ultrasonic welding, that is, the connection strength between the first housing and the second housing, and also improves the reliability of ultrasonic welding.

### BRIEF DESCRIPTION OF THE DRAWINGS

For more clearly illustrating embodiments of the present application or technical solutions in the conventional technology, the drawings referred to for describing the embodiments or the conventional technology will be briefly described hereinafter. Apparently, the drawings in the following description are only some examples of the present application, and for those skilled in the art, other drawings may be obtained based on the provided drawing without any creative efforts.
FIG. 1 is a schematic structural view of an ultrasonic welded housing provided according to an embodiment of the present application;
FIG 2 is a schematic structural view of a first housing provided according to an embodiment of the present application;
FIG. 3 is a schematic structural view of a first housing buckle provided according to an embodiment of the present application;
FIG. 4 is a schematic structural view of a second housing provided according to an embodiment of the present application;
FIG. 5 is a schematic structural view showing the first housing and the second housing provided according to an embodiment of the present application after ultrasonic welding;
FIG 6 is a schematic view showing a clamping connection between the first housing buckle and a second housing buckle provided according to an embodiment of the present application after ultrasonic welding;
FIG. 7 is a schematic structural view of a first welding surface and a second welding surface provided according to an embodiment of the present application after ultrasonic welding;
FIG. 8 is a schematic view showing a clamping connection between the first housing and a second housing provided according to an embodiment of the present application before ultrasonic welding;
FIG. 9 is a schematic structural view of a first welding surface and a second welding surface provided according to an embodiment of the present application before ultrasonic welding.

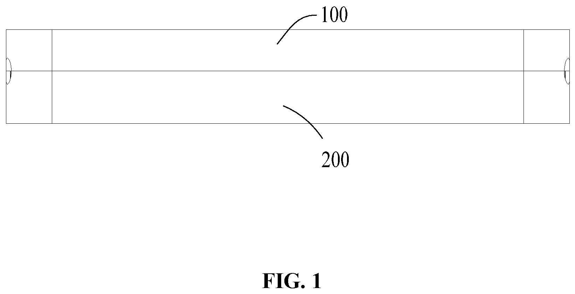

Reference numerals in FIG. 1 to FIG. 9 are listed as follows:
100 first housing, 101 first housing buckle, 1011 first-layer male buckle, 1012 second-layer male buckle, 102 inserting plate, 103 diagonal-braced rib plate, 200 second housing, 201 second housing buckle, 202 slot, 300 ultrasonic welding structure, 301 first welding surface, 302 second welding surface, 303 welding rib.

### DETAILED DESCRIPTION OF THE EMBODIMENTS

An ultrasonic welding buckle structure is provided according to the present application, enabling the matched buckle structure to play a role before and after ultrasonic welding to improve connection strength, ultrasonic welding quality and ultrasonic welding efficiency after ultrasonic welding.

An ultrasonic welded housing with the ultrasonic welding buckle structure described above is further provided according to the present application.

The technical solutions according to the embodiments of the present application will be described clearly and completely as follows in conjunction with the drawings in the embodiments of the present application. It is apparent that the described embodiments are only some of the embodiments according to the present application, rather than all the embodiments. All other embodiments obtained by those skilled in the art based on the embodiments of the present application without any creative work fall within the protection scope of the present application.

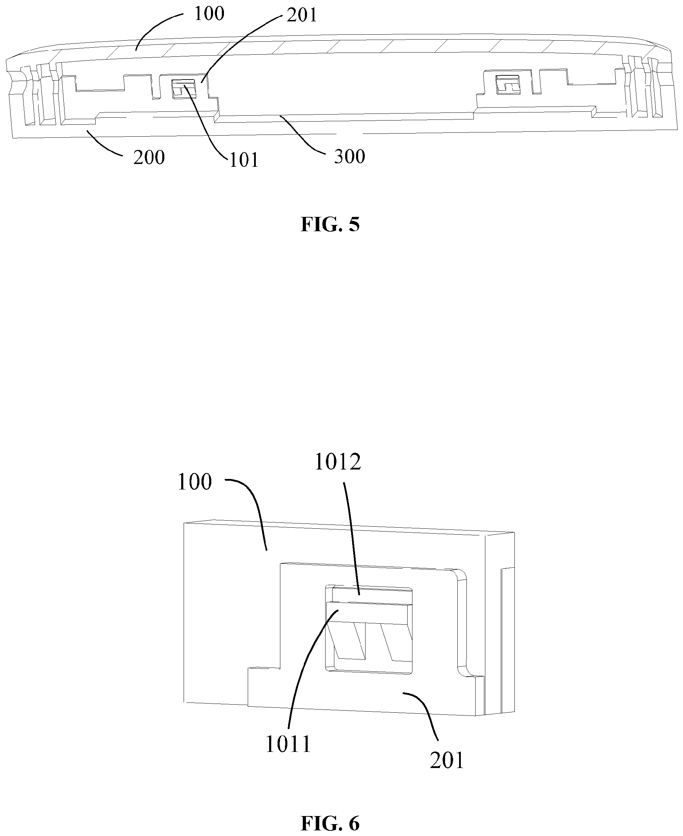

As shown in FIG. 5, the ultrasonic welding buckle structure provided according to an embodiment of the present application is used to realize a buckle connection between the first housing 100 and the second housing 200 during ultrasonic welding. Specifically, the ultrasonic welding buckle structure includes a first housing buckle 101 and a second housing buckle 201.

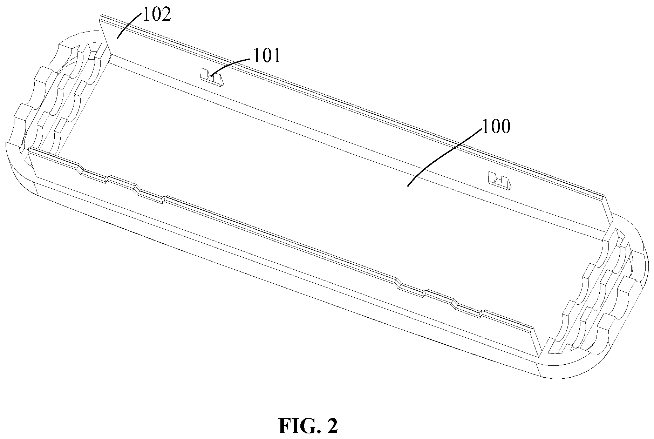

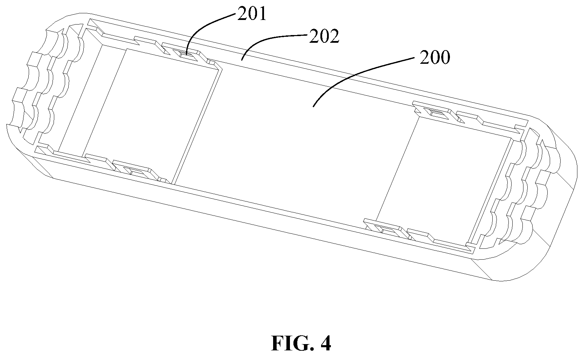

As shown in FIG. 2, the first housing buckle 101 is provided on the first housing 100. As shown in FIG. 4, the second housing buckle 201 is provided on the second housing 200. The second housing buckle 201 is configured to buckle with the first housing buckle 101.

Due to the melting of the welding part during ultrasonic welding, the first housing 100 and the second housing 200 move relative to each other after ultrasonic welding. That is, compared to their positions before ultrasonic welding, the first housing 100 and the second housing 200 move relative to each other in an assembly direction of the first housing 100 and the second housing 200 after ultrasonic welding. As shown in FIG. 1, the second housing 200 is located at a bottom end of the first housing 100, and the second housing 200 is used as a basis, that is, the second housing 200 is fixed. After ultrasonic welding, the first housing 100 moves towards the second housing 200 in the assembly direction of the first housing 100 and the second housing 200. It is also possible that the second housing 200 is located at a top end of the first housing 100 or that the second housing 200 and the first housing 100 are arranged in other directions, which is not limited in this embodiment.

Based on this, in order to ensure that the buckle connection between the first housing buckle 101 and the second housing buckle 201 can be achieved before and after ultrasonic welding, and then the first housing 100 is buckled with the second housing 200 securely, in this embodiment, at least two first housing buckles 101 and at least one second housing 200 are arranged in sequence in the assembly direction of the first housing 100, or, at least two second housing buckles 201 and at least one first housing buckle 101 are arranged in sequence in the assembly direction of the first housing 100 and the second housing 200.

Specifically, in a case that at least two first housing buckles 101 are arranged in sequence in the assembly direction of the first housing 100 and the second housing 200, one part of the at least two first housing buckles 101 is buckled with corresponding second housing buckle 201 before ultrasonic welding, and another part of the at least two first housing buckles 101 is buckled with corresponding second housing buckle 201 after ultrasonic welding.

In a case that the at least two the second housing buckles 201 are arranged in sequence in the assembly direction of the first housing 100 and the second housing 200, one part of the second housing buckles 201 is buckled with corresponding first housing buckle 101 before ultrasonic welding, and another part of the second housing buckles 201 is buckled with corresponding first housing buckle 101 after ultrasonic welding.

The ultrasonic welding buckle structure provided in the above embodiment ensures that the first housing 100 and the second housing 200 are securely buckled with each other during ultrasonic welding through the first housing buckle 101 correspondingly buckling with second housing buckle 201 before ultrasonic welding, which reduces the probability of the first housing 100 and the second housing 200 breaking apart from each other during ultrasonic welding, improves the ultrasonic welding efficiency and quality, and provides the possibility for automatic production. After ultrasonic welding, another corresponding first housing buckle 101 and second housing buckle 201 are buckled with each other, which improves the connection strength, that is, the connection strength between the first housing 100 and the second housing 200, and also improves the reliability of ultrasonic welding.

Types of the first housing buckle 101 and the second housing buckle 201 are not limited here, as long as they fit with each other to realize buckling. Specifically, the first housing buckle 101 may be a male buckle and the second housing buckle 201 may be a female buckle. Alternatively, the first housing buckle 101 is a female buckle and the second housing buckle 201 is a male buckle.

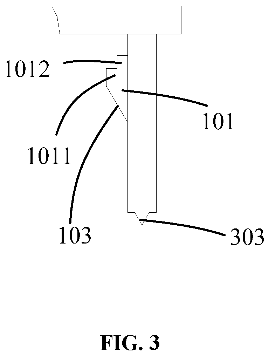

In a specific embodiment, as shown in FIG. 3, the first housing buckle 101 is a male buckle, that is, the first housing buckle 101 has a convex structure. As shown in FIG. 4, the second housing buckle 201 is a female buckle, that is, the second housing buckle 201 has a concave structure. In a mounting process, the male buckle is inserted into the female buckle. Specifically, during assembly, the second housing 200 is fixed in such a way that the first housing 100 is mounted on the second housing 200, and the assembly direction refers to a mounting direction in which the first housing 100 faces the second housing 200.

The number of the first housing buckle 101 and the second housing buckle 201 is selected based on actual needs, and is not limited here. In order to simplify the structure, at least two first housing buckles 101 or at least two the second housing buckles 201 may be selected to be sequentially arranged in the assembly direction of the first housing 100 and the second housing 200.

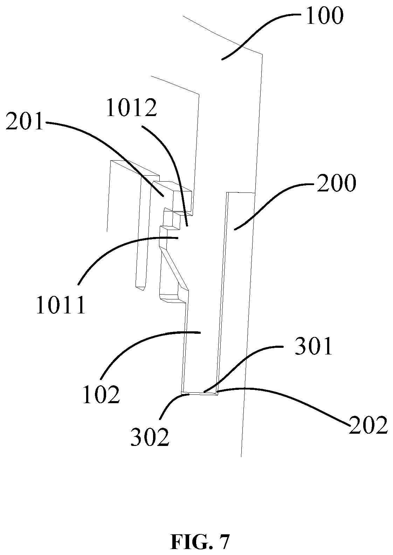

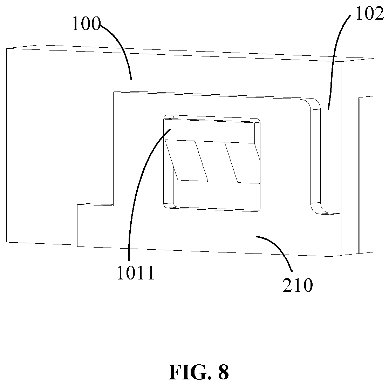

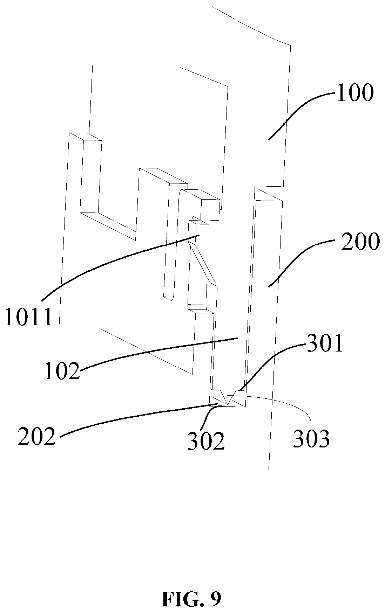

In a specific embodiment, as shown in FIG. 3, there are two first housing buckles 101, namely a first-layer male buckle 1011 and a second-layer male buckle 1012, and the first-layer male buckle 1011 and the second-layer male buckle 1012 are arranged in sequence in the assembly direction of the first housing 100 to the second housing 200. Specifically, during assembly, the first-layer male buckle 1011 is buckled with the second housing buckle 201 before the second-layer male buckle 1012. Specifically, as shown in FIG. 8 and FIG. 9, before ultrasonic welding, the first-layer male buckle 1011 is buckled with the second housing buckle 201, and the second-layer male buckle 1012 is not buckled with the second housing buckle 201. As shown in FIG. 6 and FIG. 7, after ultrasonic welding, the second-layer male buckle 1012 is buckled with the second housing buckle 201, and the first-layer male buckle 1011 is not buckled with the second housing buckle 201.

On the basis of the above embodiment, as shown in FIG. 3, in order to ensure that when the first housing 100 and the second housing 200 is assembled, the first-layer male buckle 1011 is buckled with the second housing buckle 201 before the second-layer male buckle 1012 in the assembly direction, and the second-layer male buckle 1012 does not affect the first-layer male buckle 1011 buckling with the second housing buckle 201, the first-layer male buckle 1011 and the second-layer male buckle 1011 may be selected to have a ladder structure, that is, a step structure, in which a width of the second-layer male buckle 1011 protruding from the first housing 100 is smaller than a width of the first-layer male buckle 1011 protruding from the first housing 100.

As shown in FIG. 8 and FIG. 9, when the first housing 100 and the second housing 200 is assembled before ultrasonic welding, the first-layer male buckle 1011 first is buckled with the second housing buckle 201, which ensures the first housing 100 being securely buckled with the second housing 200 during ultrasonic welding, thus improving the welding efficiency and quality. After ultrasonic welding, the second-layer male buckle 1012 is buckled with the second housing buckle 201, which ensures the connection strength between the first housing 100 and the second housing 200, thus ensuring the reliability of the ultrasonic welding.

In order to ensure the firmness of the buckle connection between the first housing 100 and the second housing 200 as well as the mounting convenience, as shown in FIG. 3, a side of the first-layer male buckle 1011 facing away from the second-layer male buckle 1012 may be selected to be connected with the first housing 100 through a diagonal-braced rib plate 103. The arrangement of the diagonal-braced rib plate 103 not only ensures the firmness of the buckle connection between the first housing 100 and the second housing 200, but also facilitates the first housing buckle 101 sliding into the second housing 200, thereby make it easier for the first housing buckle 101 and the second housing buckle 201 to buckl with each other.

In another specific embodiment, the first housing buckle 101 is a male buckle, and the second housing buckle 201 is a female buckle. There are two second housing buckles 201, namely the first-layer female buckle and the second-layer female buckle. In the assembly direction of the second housing 200 to the first housing 100, the first-layer female buckle and the second-layer female buckle are arranged in sequence. When the first housing 100 and the second housing 200 is assembled, the first housing 100 is fixed, and then the second housing 200 is assembled on the first housing 100. Specifically, the first-layer female buckle is buckled with the first housing buckle 101 before the second-layer female buckle.

Before ultrasonic welding, the first-layer female buckle is buckled with the first housing buckle 101, which ensures that the first housing 100 is securely buckled with the second housing 200 during ultrasonic welding, thus reducing the probability of the first housing 100 and the second housing 200 breaking apart from each other during ultrasonic welding, and further improving the ultrasonic welding efficiency and welding quality. After ultrasonic welding, the second-layer female buckle is buckled with the first housing buckle 101, which ensures the connection strength between the first housing 100 and the second housing 200, and further ensures the reliability of the ultrasonic welding. This embodiment is not shown in the attached drawings.

In another specific embodiment, the first housing buckle 101 is a male buckle and two first housing buckles are provided, namely, the first-layer male buckle 1011 and the second-layer male buckle 1012, meaning the first housing buckle 101 has a multi-layer buckle structure. The second housing buckle 201 is a female buckle and two second housing buckles 201 are provided, namely, the first-layer female buckle and the second-layer female buckle, meaning that the second housing buckle 201 has a multi-layer buckle structure.

In the above-mentioned embodiment, in the assembly direction of the first housing 100 to the second housing 200, the first-layer male buckle 1011 and the second-layer male buckle 1012 are arranged in sequence. Specifically, when the first housing 100 is assembled to the second housing 200, the first-layer male buckle 1011 is buckled with the second housing buckle 201 before the second-layer male buckle 1012. In the assembly direction of the second housing 200 to the first housing 100, the first-layer female buckle and the second-layer female buckle are arranged in sequence. Specifically, when the second housing 200 is assembled to the first housing 100, the first-layer female buckle is first buckled with the first-layer male buckle 1011.

When the first housing 100 and the second housing 200 are ultrasonically welded, the first-layer female buckle is buckled with the first-layer male buckle 1011, which ensures the buckle of the first housing 100 and the second housing 200 and improves the ultrasonic welding efficiency and quality. After the first housing 100 and the second housing 200 are ultrasonically welded, the second-layer female buckle is buckled with the second-layer male buckle 1012, thus ensuring the connection strength between the first housing 100 and the second housing 200, and further ensuring the reliability of ultrasonic welding.

As shown in FIG. 1, an ultrasonic welded housing is further provided according to an embodiment of the present application. The ultrasonic welded housing includes a first housing 100 and a second housing 200, which are buckled with each other by the ultrasonic welding buckle structure provided in the above embodiment, and are connected with each other by ultrasonic welding. In order to facilitate the connection of the first housing 100 and the second housing 200 through ultrasonic welding, the first housing 100 and the second housing 200 can be buckled with each other. In a specific embodiment, in order to facilitate the assembly of the first housing 100 and the second housing 200 and ensure the firmness of the connection between the first housing 100 and the second housing 200 after they are buckled with each other, as shown in FIG. 4, the second housing 200 is provided with a slot 202, and as shown in FIG. 2, the first housing 100 is provided with an inserting plate 102 inserted into the slot 202. When the first housing 100 and the second housing 200 are assembled, it is only necessary to insert the inserting plate 102 into the slot 202, which makes the assembly simple and efficient.

In order to facilitate the engagement, the first housing buckle 101 may be arranged on the inserting plate 102, and the second housing buckle 201 may be arranged on the side wall of the slot 202. When the inserting plate 102 is inserted into the slot 202, the first housing buckle 101 and the second housing buckle 201 are buckled with each other. The arrangement of the inserting plate 102 and the slot 202 enables the first housing 100 and the second housing 200 to be positioned and assembled in a simple way, and further ensures the firmness of the connection between the first housing 100 and the second housing 200 after they are buckled tightly with each other.

It can be understood that the side wall of the slot 202 has certain elasticity to ensure that the first housing buckle 101 is buckled with the second housing buckle 201 when the inserting plate 102 is inserted into the slot 202.

In the above embodiment, specific structure of an ultrasonic welding structure 300 is selected based on actual needs. Specifically, the ultrasonic welding structure 300 includes a first welding surface 301 disposed on the inserting plate 102 and a second welding surface 302 disposed on the slot 202.

As shown in FIG. 7 and FIG. 9, the side of the inserting plate 102 facing the bottom wall of the slot 202 may be selected as the first welding surface 301, and the bottom wall of the slot 202 is the second welding surface 302, where the first welding surface 301 and the second welding surface 302 are opposite to each other during ultrasonic welding. To facilitate ultrasonic welding, at least one of the first welding surface 301 and the second welding surface 302 is provided with a welding rib 303, which melts during ultrasonic welding to enable the fusion welding between the first welding surface 301 and the second welding surface 302. To facilitate the contact welding between the welding rib 303 and the opposite welding surface, the cross-sectional area of the welding rib 303 decreases along a direction where the welding surface points to the opposite welding surface. For example, the welding rib 303 has a conical structure, although the cross-section of the welding rib 303 may also have other shapes.

It should be noted that the cross-section of the welding rib 303 is perpendicular to the distribution direction of the first welding surface 301 and the second welding surface 302.

In other embodiments, the first welding surface 301 and the second welding surface 302 may be located in other positions. For example, the second welding surface 302 is located on the side wall of the slot 202 and the first welding surface 301 is located on the side surface of the inserting plate 102, which is not limited to the above embodiments.

Here, taking the following as an example to describe. The first housing buckle 101 is a male buckle and the number is two, namely the first-layer male buckle 1011 and the second-layer male buckle 1012 respectively arranged along the assembly direction of the first housing 100 and the second housing 200, and the second housing buckle 201 is a female buckle. Before ultrasonic welding, the first-layer male buckle 1011 is engaged with the second housing buckle 201. In this case, a distance between the first welding surface 301 and the second welding surface 302 allows the welding rib 303 to abut against the opposite welding surface. During ultrasonic welding, the welding rib 303 melts, and the first housing 100 is close to the second housing 200. After ultrasonic welding is completed, the welding rib 303 is completely melted, and the first welding surface 301 and the second welding surface 302 are in contact with each other, thus realizing fusion welding. In this case, the second-layer male buckle 1012 is clamped with the second housing buckle 201. In other embodiments, the contact process between the first welding surface 301 and the second welding surface 302 during ultrasonic welding is the same, which is not repeated here.

In a specific embodiment, the first housing 100 is a plastic housing cover and the second housing 200 is a plastic housing, or the first housing 100 is a plastic housing and the second housing 200 is a plastic housing cover. That is, whether the first housing 100 and the second housing 200 are plastic housing covers or plastic housings is not limited, as long as the corresponding matching between the first housing 100 and the second housing 200 is satisfied.

In other embodiments, the first housing 100 and the second housing 200 may be selected as metal parts or non-metal parts other than plastic parts, and are not limited to plastic housings and plastic housing covers.

It should be noted that the embodiments in this specification are described in a progressive manner. Each of the embodiments focuses on differences with other embodiments, and the same or similar parts of the embodiments may be with reference to each other.

As shown in the present application and the claims, the words "a", "one", "one type" and/or "this" are not specifically referring to the singular, but may also include the plural, unless the context clearly indicates exceptions. Generally speaking, the terms "include" and "comprise" only indicate that the steps and elements that have been clearly identified are included, and these steps and elements do not constitute an exclusive list. A Method or an apparatus may also contain other steps or elements. The elements limited by the statement "comprising (including) a..." do not exclude the existence of other identical elements exist in the process, method, product or apparatus that includes the elements.

The terms "first", "second" and the like are for purpose of description, and should not be interpreted as indicating or implying relative importance or implying the number of the indicated technical features. Therefore, the feature defined by "first" and "second" may explicitly or implicitly be one or more in number.

The principle and the embodiments of the present application are illustrated herein by specific examples. The above description of the examples is only intended to facilitate the understanding of the core concept of the present application. It should be noted that, several improvements and modifications may be made by those skilled in the art to the present application without departing from the principle of the present application, and these improvements and modifications also fall within the protection scope of the claims of the present application.

## Claims

1. An ultrasonic welding buckle structure for realizing a buckle connection between a first housing (100) and a second housing (200) during ultrasonic welding, wherein the ultrasonic welding buckle structure comprises:
a first housing buckle (101) arranged on the first housing (100); and
a second housing buckle (201) arranged on the second housing (200) and engaged with the first housing buckle (101);
wherein at least two first housing buckles (101) and at least one second housing buckle (201) are sequentially arranged in an assembly direction of the first housing and the second housing, or at least one first housing buckle (101) and at least two second housing buckles (201) are sequentially arranged in the assembly direction of the first housing (100) and the second housing (200).

2. The ultrasonic welding buckle structure according to claim 1, wherein the first housing buckle (101) is a male buckle, and the second housing buckle (201) is a female buckle;
there are two first housing buckles (101), namely a first-layer male buckle (1011) and a second-layer male buckle (1012), and the first-layer male buckle (1011) and the second-layer male buckle (1012) are arranged in sequence in the assembly direction of the first housing (100) to the second housing (200); and
when the first housing (100) and the second housing (200) are being ultrasonically welded, the first-layer male buckle (1011) is buckled with the second housing buckle (201), and after the first housing (100) and the second housing (200) are ultrasonically welded, the second-layer male buckle (1012) is buckled with the second housing buckle (201).

3. The ultrasonic welding buckle structure as claimed in claim 2, wherein the first-layer male buckle (1011) and the second-layer male buckle (1012) are of a stepped structure, and a width of the second-layer male buckle (1012) protruding from the first housing (100) is smaller than a width of the first-layer male buckle (1011) protruding from the first housing (100).

4. The ultrasonic welding buckle structure according to claim 2, wherein a side of the first-layer male buckle (1011) facing away from the second-layer male buckle (1012) is connected with the first housing (100) through a diagonal-braced rib plate (103).

5. The ultrasonic welding buckle structure according to claim 1, wherein the first housing buckle (101) is a male buckle, and the second housing buckle (201) is a female buckle;
there are two second housing buckles (201), namely a first-layer female buckle and a second-layer female buckle, and the first-layer female buckle and the second-layer female buckle are sequentially arranged in the assembly direction of the second housing (200) to the first housing (100); and
when the first housing (100) and the second housing (200) are being ultrasonically welded, the first-layer female buckle is buckled with the first housing buckle (101), and after the first housing (100) and the second housing (200) are ultrasonically welded, the second-layer female buckle is buckled with the first housing buckle (101).

6. The ultrasonic welding buckle structure according to claim 1, wherein the first housing buckle (101) is a male buckle, and the second housing buckle (201) is a female buckle;
there are two first housing buckles (101), namely a first-layer male buckle (1011) and a second-layer male buckle (1012), and the first-layer male buckle (1011) and the second-layer male buckle (1012) are sequentially arranged along the assembly direction of the first housing (100) to the second housing (200);
there are two second housing buckles (201), namely a first-layer female buckle and a second-layer female buckle, and the first-layer female buckle and the second-layer female buckle are sequentially arranged in the assembly direction of the second housing (200) to the first housing (100); and
when the first housing (100) and the second housing (200) are being ultrasonically welded, the first-layer female buckle is buckled with the first-layer male buckle (1011), and after the first housing (100) and the second housing (200) are ultrasonically welded, the second-layer female buckle is buckled with the second-layer male buckle (1012).

7. An ultrasonic welded housing, comprising a first housing (100) and a second housing (200), wherein the first housing (100) and the second housing (200) are buckled and matched with each other by the ultrasonic welding buckle structure according to any one of claims 1 to 6, and the first housing (100) and the second housing (200) are welded with each other by ultrasonic welding.

8. The ultrasonic welded housing according to claim 7, wherein the second housing (200) is provided with a slot (202), the first housing (100) is provided with an inserting plate (102) inserted into the slot (202), and the first housing buckle (101) is arranged on the inserting plate (102), and the second housing buckle (201) is arranged on a side wall of the slot (202).

9. The ultrasonic welded housing according to claim 8, wherein a side of the inserting plate (102) facing a bottom wall of the slot (202) is a first welding surface (301), the bottom wall of the slot (202) is a second welding surface (302), and one of the first welding surface (301) and the second welding surface (302) is provided with a welding rib (303).

10. The ultrasonic welded housing according to claim 7, wherein the first housing (100) is a plastic housing cover, and the second housing (200) is a plastic housing, or the first housing (100) is a plastic housing, and the second housing (200) is a plastic housing cover.
